# EUROPEAN PATENT APPLICATION

(11) **EP 4 545 455 A1**
(43) Date of publication of application: **30.04.2025**
(21) Application number: 24209040.5
(22) Date of filing: 25.10.2024
(51) Int. Cl.: B65G 23/06, A01D 61/00, A01D 75/18

(54) **TOPSHAFT ROTARY ANTIWRAP**

(30) Priority: 27.10.2023 US 202363545957 P
(71) Applicant: CNH Industrial America LLC, New Holland, PA 17557 (US)
(72) Inventor: Boriack, Cale, New Holland, 17557 (US); Beidler, Lyle, New Holland, 17557 (US); Yoder, Denver, New Holland, 17557 (US)
(74) Representative: CNH Industrial IP Department

(57) **Abstract**

A topshaft rotary antiwrap assembly includes a topshaft assembly having (i) a shaft configured for rotating about a rotation axis, and (ii) one or more sprockets mounted to the shaft concentrically to the rotation axis to move in a rotation direction about the rotation axis. The topshaft rotary antiwrap assembly also includes a first scraper body located adjacent to the topshaft assembly and has: a first sprocket scraper located adjacent to an outer perimeter of a first sprocket of the one or more sprockets and radially aligned with the first sprocket relative to the rotation axis. The first sprocket scraper includes a respective sprocket scraper body that extends from a leading edge to a trailing edge. The trailing edge is offset from the leading edge along the rotation axis such that the sprocket scraper body directs a respective adjacent portion of crop material at least partially along the rotation axis.

## Description

### BACKGROUND OF THE INVENTION

Agricultural combines and similar equipment typically include a feeder that connects the header to the vehicle chassis. The feeder includes a conveyor that carries crop material from the header to the chassis. Such conveyors typically comprise multiple slats that are supported on chains. The chains are driven and supported by sprockets mounted on rotating shafts. In a typical feeder, the conveyors wrap around a drum at the inlet, and around sprockets at the outlet. The sprockets are rigidly mounted on a common topshaft, such that all of the sprockets rotate in unison to maintain proper timing of the chains.

During use, crop material can potentially wrap around the sprockets and the sprocket drive shaft. This can lead to chains jumping the sprockets, excessive wear, and accumulated crop materials that require manual removal.

To address this problem, typical feeder conveyors have an anti-wrap system comprising covers and shields that inhibit the accumulation of crop material on and around the sprockets and topshaft. For example, it is known to provide a system of plastic anti-wrap covers surrounding the conveyor topshaft drive sprockets, and metal shaft covers spanning between the plastic sprocket covers to enclose the topshaft. The covers are rigidly mounted to the feeder house (e.g., to a center structure located within the conveyor loop).

While antiwrap systems can operate with some degree of success, the inventors have determined that the state of the art can still be improved.

This description of the background is provided to assist with an understanding of the following explanations of exemplary embodiments, and is not an admission that any or all of this background information is necessarily prior art.

### SUMMARY

In a first exemplary aspect, there is provided a topshaft rotary antiwrap assembly comprising: (a) a topshaft assembly comprising: (i) a shaft configured for rotating about a rotation axis, and (ii) one or more sprockets mounted to the shaft concentrically to the rotation axis to move in a rotation direction about the rotation axis; and (b) a first scraper body located adjacent to the topshaft assembly and comprising: a first sprocket scraper located adjacent to an outer perimeter of a first sprocket of the one or more sprockets and radially aligned with the first sprocket relative to the rotation axis, wherein the first sprocket scraper comprises a respective sprocket scraper body that extends from a respective leading edge to a respective trailing edge, and wherein the trailing edge is offset from the leading edge along the rotation axis and along the rotation direction such that the sprocket scraper body directs a respective adjacent portion of crop material at least partially along the rotation axis as the respective adjacent portion of crop material moves along the rotation direction from the leading edge to the trailing edge.

### BRIEF DESCRIPTION OF THE DRAWINGS

Embodiments will now be described, strictly by way of example, with reference to the accompanying drawings, in which:
FIG. 1 schematically illustrates an agricultural harvester.
FIG. 2 is an isometric, partially exploded view of an exemplary embodiment of a topshaft assembly and a scraper assembly.
FIG. 3 is a top view of a portion of the topshaft assembly and scraper assembly of

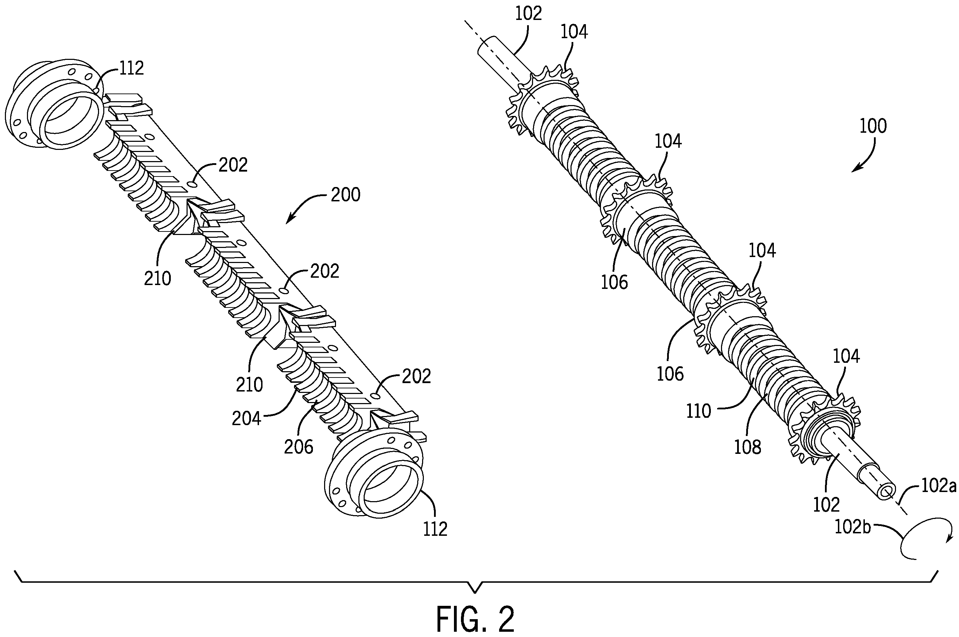

FIG. 2, shown assembled together.

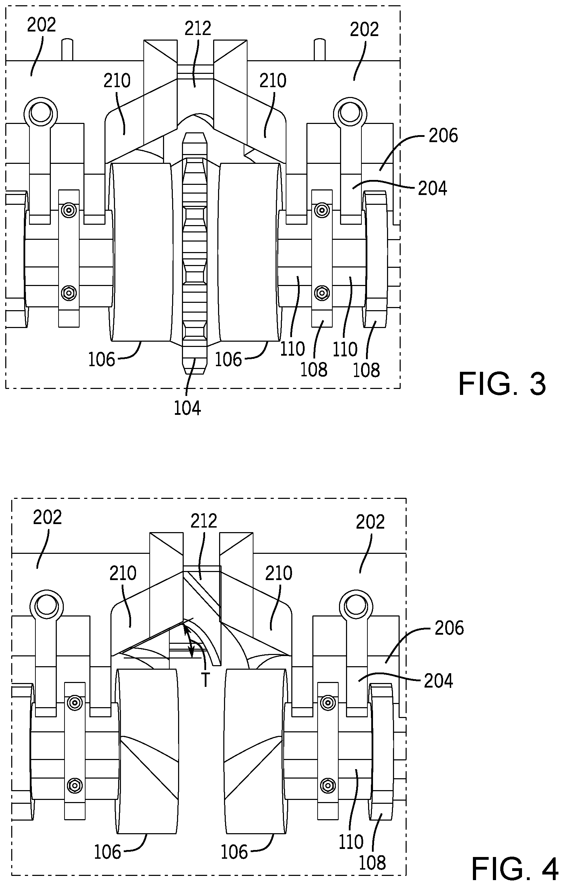

FIG. 4 is top view of a portion of the scraper assembly of FIG. 2, with the topshaft assembly omitted.

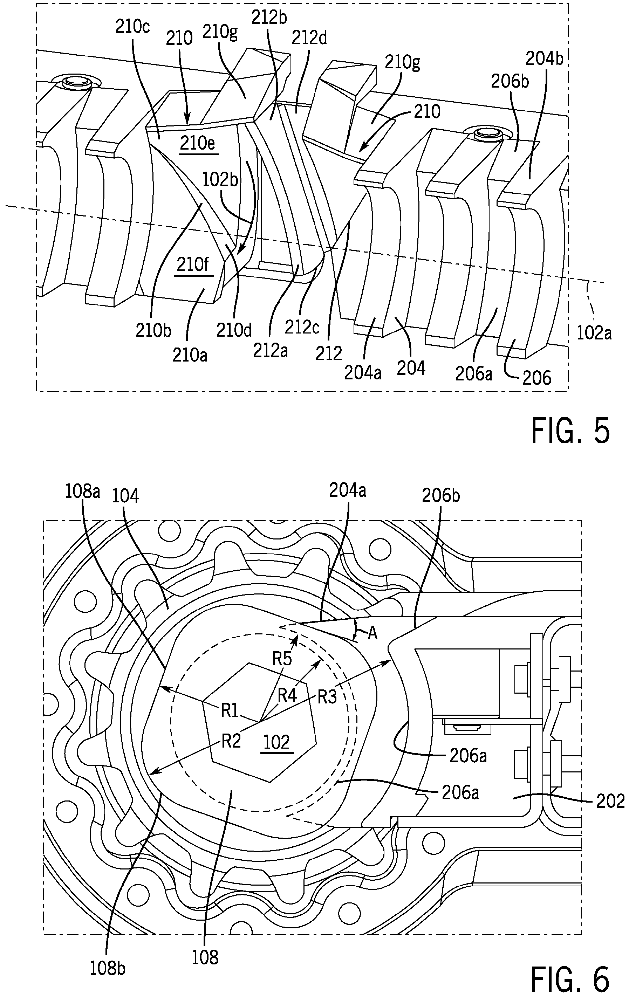

FIG. 5 is a perspective view of the scraper assembly of FIG. 2, with the topshaft assembly omitted.
FIG. 6 is a cross-sectional side view of the topshaft assembly and scraper assembly of FIG. 2.

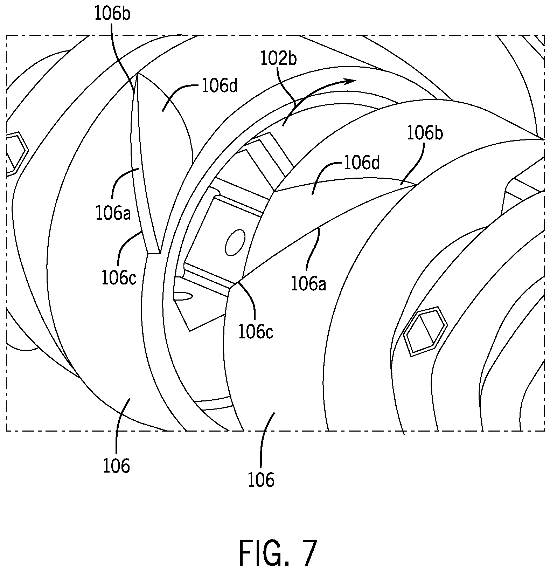

FIG. 7 is an isometric view of a portion of the topshaft assembly of FIG. 2.

In the figures, like reference numerals refer to the same or similar elements.

### DETAILED DESCRIPTION OF EXEMPLARY EMBODIMENTS

The drawing figures depict one or more implementations in accordance with the present concepts, by way of example only, not by way of limitations. The examples are shown in conjunction with an agricultural combine harvester, but have applicability in any similar agricultural vehicle, such as a windrower.

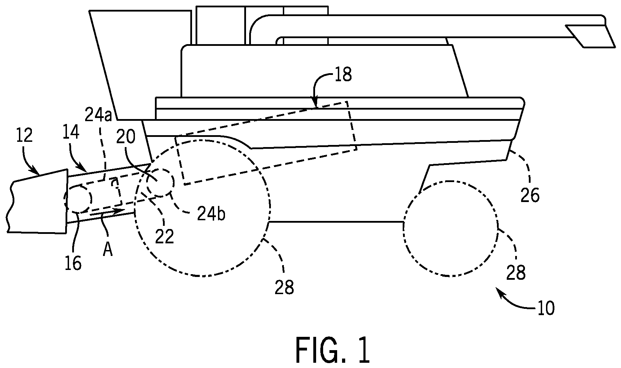

FIG. 1 shows an exemplary embodiment of an agricultural vehicle 10 in the form of a combine harvester. The vehicle 10 generally includes a chassis 26 that is supported for movement on an underlying ground surface by wheels 28 (e.g., pneumatic tires, tracked wheels, etc.), and a header 12 that is carried by the chassis 26.

The header 12 is configured to gather crop material from the ground, and convey it to the chassis 26 via a feeder assembly. The feeder assembly includes a feeder housing 14 in which a conveyor assembly 16 operates. The conveyor assembly 16 includes a topshaft assembly 20 and a lower shaft that hold respective ends of an endless conveyor in the form of flexible belts or chains having paddles or the like extending between the belts or chains. The paddles drive crop material from the header 12 to a thresher 18 located in the chassis 26. The conveyor typically includes gaps between adjacent belts/chains, and between adjacent paddles, and crop material can move through these openings. The conveyor belt wraps around the topshaft 20 with an upper belt section 24a and a lower belt section 24b extending from the topshaft assembly 20 at spaced-apart locations. A scraper assembly 22 is located between the upper and lower belt sections 24a, 24b. The scraper assembly is configured to help remove crop material that might otherwise become trapped between the conveyor and the topshaft.

FIG. 2 shows details of an exemplary topshaft assembly 100 and scraper assembly 200 that may be used in the vehicle 10 of FIG. 1, or in other vehicles or equipment.

The topshaft assembly 100 generally comprises a shaft 102 that is mounted to the feeder housing 14, chassis 26, or another main supporting structure by shaft bearings 112 in a conventional manner. The shaft 102 is mounted on the shaft bearings 112 to rotate about a rotation axis 102a. Along the shaft 102 are mounted one or more sprockets 104 that are concentric to the rotation axis and, when the shaft 102 is rotated, move in a rotation direction 102b about the rotation axis 102a. The sprockets 104 are conventional, and may include teeth or other drive structures to propel the conveyor belt and thereby move crop material from the header 12 to the thresher 18.

The scraper assembly 200 includes one or more scraper bodies 202 located adjacent to the topshaft assembly 100. The scraper bodies 202 may comprise separate parts that are assembled together or adjacent to each other, or a single unitary part. The scraper assembly 200 is mounted to the feeder housing 14, chassis 26, or another main supporting structure, in a generally fixed position relative to the shaft bearings 112. For example, the scraper assembly may be rigidly fixed to the feeder housing 14, or mounted to the feeder housing 14 by flexible supports that allow a limited range of movement relative to the feeder housing 14. In any event, the scraper assembly 200 is positioned within the two extending upper and lower sections of the conveyor belt 24a, 24b to remain adjacent to the topshaft assembly 100 during operation.

Referring now more particularly to FIGS. 4 and 5, the scraper bodies 202 include one or more sprocket scrapers 212. Each sprocket scraper 212 is located adjacent to an outer perimeter a respective sprocket 104, and radially aligned with the respective sprocket 104 relative to the rotation axis 102a ("radially aligned" means that a radial line extending in a plane orthogonal to the rotation axis 102a passes through the identified parts). Each sprocket scraper 212 has a scraper body 212a that extends from a leading edge 212b to a trailing edge 212c. The trailing edge 212c is offset from the leading edge 212b along both the rotation axis 102a and the rotation direction 102b. Thus, the scraper body 212a assumes a ramp-like shape that is tilted relative to the rotation axis 102a (i.e., the scraper body 212a extends in a direction that is not parallel to a plane that is orthogonal to the rotation axis 102a). The scraper body 212a may be planar, or have a curved shape, such as being formed as a segment of a helix or spiral that wraps around the rotation axis 102a.

In use, crop material may occasionally move into the space between the sprocket 104 and the sprocket scraper 212. When this happens, the adjacent crop material may be propelled by the sprocket 104 (or by other crop material or other forces) along the rotation direction 102b. This crop material contacts the sprocket scraper 212, and as the crop material moves from the leading edge 212b to the trailing edge 212c, the sprocket scraper body 212a redirects the crop material to have a movement vector along the rotation axis 102a. Or, stated differently, the sprocket scraper 212 pushes the crop material sideways along the rotation axis 102a. This redirects the crop material so that less of the crop material falls on the lower stretch of the chain that is moving towards the topshaft assembly. Thus, the sprocket scraper 212 helps reduce or prevent the accumulation of crop material between the chain and the sprocket 104.

The sprocket scraper 212 also may include a blocking wall 212d that extends along the rotation axis 102a and along the rotation direction 102b, with the sprocket scraper body 212a located radially between the blocking wall 212d and the sprocket 104. The blocking wall 212d forms a backstop that prevents crop material from passing radially past the sprocket scraper 212 and falling downwards onto the chain below.

In the shown examples there is a single sprocket scraper 212 for each sprocket 104. However, multiple sprocket scrapers 212 may be located at each sprocket. For example, a second sprocket scraper 212 may be located below the first one and angled in the same direction or in the opposite direction. Also, a sprocket scraper 212 may be formed with a chevron or inverted V shape to direct crop material in opposite directions away from the underlying chain. Other alternatives and embodiments will be apparent to persons of ordinary skill in the art in view of the present disclosure.

The topshaft assembly 100 and/or scraper assembly 200 also may include other features to help prevent undesirable accumulations or placement of crop material. For example, referring more specifically to FIGS. 3-5, the scraper assembly 200 may include one or more crop guides 210 that are located adjacent to one or both sides of a sprocket 104, and offset from the sprocket 104 along the rotation axis 102a. The crop guides 210 are configured to act as funnels or the like to direct crop material towards the sprocket 106, where the crop material can fall down, and possibly be redirected by the sprocket scraper 212 as it falls.

Each crop guide 210 can include multiple different surfaces that help direct the crop material towards the sprocket 104. In the shown examples, each crop guide 210 has a crop guide wall 210a that extends along the rotation direction 102b, such as along a curved path that is approximately semi-circular as viewed along the rotation axis 102a. A crop guide wall step 210b extends radially from the crop guide wall 210a towards the rotation axis 102a and faces opposite the rotation direction 102b, so that crop material moving in the rotation direction 102b contacts the step 210b. The step 210b extends from a leading end 210c to a trailing end 210d along the rotation axis 102a, in a direction towards the sprocket 104. The step 210b also extends from the leading end 210c to the trailing end 210d forward along the rotation direction 102b.

Thus, the step 210b directs adjacent crop material at least partially along the rotation axis 102a towards the sprocket 106 as the crop material moves along the rotation direction 102b.

The crop guide wall step 210b divides the crop guide wall 210a between a leading guide wall surface 210e and a trailing guide wall surface 210f. Because the step 210b protrudes to face opposite the rotation direction 102b, the trailing guide wall surface 210e is (at least at the location of the step 210b) closer to the rotation axis 102a than the trailing guide wall surface 210f. One or both of the leading guide wall surface 210e and trailing guide wall surface 210f may be tapered in the radial direction away from the rotation axis at a taper angle T (see FIG. 4), so as to provide another surface that directs adjacent crop material towards the sprocket 104. In the shown example, the leading guide wall surface 210e is tapered, and the trailing guide wall surface is not tapered. One or both of the leading guide wall surface 210e and trailing guide wall surface 210f may have a regular geometric shape, such as a conical or cylindrical shape, but other shapes (e.g., semi-spherical or complex curves) may also be used.

A crop guide 210 may be provided on one side or both sides of a sprocket 106. In addition, the crop guide 210 may be formed in other ways. For example, the crop guide wall step 210b may be defined as a protrusion from an otherwise continuous crop guide wall 210a (e.g., the leading guide wall surface 210e and trailing guide wall surface 210f may have a continuous conical or cylindrical shape, with the crop guide wall step 210b being an integral protrusion from the shape). The crop guide wall step 210b also may be a separate part that is attached to the crop guide wall 210a. Other alternatives and embodiments will be apparent to persons of ordinary skill in the art in view of the present disclosure.

The crop guide 210 is radially aligned with an adjacent portion of the topshaft assembly 100, and the adjacent portion also may be configured to assist with preventing or inhibiting undesirable crop accumulation. In one example, which is best shown in FIGS. 4 and 7, the topshaft assembly 100 includes a sprocket shoulder 106 that is radially aligned with the crop guide 210. The sprocket shoulder 106 is located adjacent to the sprocket 104, and offset from the sprocket 104 along the rotation axis 102a. The sprocket shoulder 106 may have any shape, but in this case it is generally cylindrical with the cylindrical axis collinear with the rotation axis 102a. The radially outer surface of the sprocket shoulder 106 includes a shoulder step 106a, which extends radially away from the adjacent portions of the sprocket shoulder 106 and faces along the rotation direction 102b to thereby push adjacent crop material as the topshaft assembly 100 rotates in the rotation direction 102b.

The shoulder step 106a can have any shape that provides a physical obstacle to push the crop material. In the shown example, the shoulder step 106a extends along the rotation axis 102a in a direction towards the sprocket 106, from a leading end 106b to a trailing end 106c. In addition, the shoulder step 106a extends from the leading end 106b to the trailing end 106c backwards along the rotation direction 102b, so that the trailing end 106c trails behind the leading end 106b as the topshaft assembly 100 rotates in the rotation direction 102b.

In the shown embodiment, the shoulder step 106a directs the adjacent crop material at least partially along the rotation axis 102a towards the sprocket 106 as the topshaft assembly 100 rotates. The shoulder step 106a and the crop guide 210 cooperate to funnel the crop material towards the sprocket 106 and the sprocket scraper 212, and are expected to help redistribute the crop material in a manner that reduces unwanted buildup.

In the shown example, the shoulder step 106a is defined by a recess 106d formed in the otherwise continuously cylindrical outer perimeter wall of the sprocket shoulder 106, but in other embodiments the shoulder step 106a may be defined as a protrusion from the remainder of the outer wall. The shoulder step 106a also may be integrally formed or added as a separate part. A sprocket shoulder 106 may be located on one side or both sides of each sprocket 106, such as shown in FIG. 2. It will also be appreciated that a sprocket shoulder 106 having a shoulder step 106a may be provided even where a crop guide 210 is not present. Other alternatives and embodiments will be apparent to persons of ordinary skill in the art in view of the present disclosure.

The shown examples also illustrate further features to help inhibit unwanted crop accumulation. For example, the topshaft assembly 100 may include one or more lobular rotors 108 that are distributed along the rotation axis 102a and secured to rotate with the shaft 102. Each rotor 108 extends radially away from the rotation axis 102a and is offset from the sprockets 104 and sprocket shoulders 106 (if present) along the rotation axis 102a.

As best shown in FIG. 6, the outer perimeter of each rotor 108 has at least one root 108a located at a first distance R1 from the rotation axis 102a, and at least one peak 108b located at a second distance R2 from the rotation axis. The first distance R1 is the minimum distance from the rotation axis 102a, and the second distance R2 is the maximum distance from the rotation axis 102b. Thus, the second distance R2 is greater than the first distance R1. In this example, each root 108a is at the same first distance R1, and each peak 108b is at the same second distance R2, but this is not strictly required (i.e., some roots 108a and/or some peaks 108b may be located at some distance between the first distance R1 and the second distance R2).

The outer surface of the rotor 108 between the roots 108a and the peaks 108b may be defined by one or more straight or curved lines as viewed along the rotation axis 102a. For example, the outer perimeter may have a shape of a rounded square, as shown, or it may have other shapes, such as a star shape, a square shape, a hexagonal shape, and so on. In any event, the rotor 108 includes at least one lobular region with respect to the rotation axis 102a (i.e., a region in which the distance from the outer surface to the rotation axis 102a changes as a function of angle about the rotation axis 102a).

The lobular regions of the rotor 108 are expected to generate a driving force to help push adjacent crop material along the rotation direction 102b, and thus help encourage breaking up and redistributing crop material that might become clumped in the region of the topshaft assembly 100.

The scraper assembly 200 may include structures that cooperate with the lobular rotors 108 to help remove crop material. For example, as shown in FIG. 6, the scraper body 202 may have a rotor wall 206a that is radially aligned with a respective lobular rotor 108, and spaced from the rotation axis by a third distance R3 that is greater than the second distance R2. Thus, a gap is defined between the rotor wall 206a and the lobular rotor's outer surface throughout the entire rotation of the lobular rotor 108. This gap allows the lobular regions of the rotor 108 to push adjacent crop material past the scraper assembly 200 to fall down to the conveyor, pass through gaps in the conveyor, and again be pushed by the conveyor paddles towards the thresher. This arrangement is contrary to conventional concepts in which a scraper is provided closely adjacent to a cylindrical shaft in an effort to prevent any crop material from passing between the shaft and the scraper.

As indicated above, multiple lobular rotors 108 may be distributed along the rotation axis 102a. In this case, the topshaft assembly 100 includes rotor gap sections 110 located between each pair of rotors 108, and/or between each rotor 108 and other structures such as sprockets 104 and sprocket shoulders 106. Each rotor gap section 110 may have a simple circular shafts shape, such as a cylindrical outer perimeter that is collinear with the rotation axis 102a, but other shapes (e.g., hexagonal) are possible. The radially outermost surface of the rotor gap section 110 is located at a fourth distance R4 form the rotation axis 102a. The fourth distance R4 may be less than the first distance R1 (i.e., less than the minimum radial distance of the lobular rotor roots 108a), but this is not strictly required.

The scraper assembly 200 may include features to help remove crop material at the locations of the rotor gap sections 110. For example, the scraper body 202 may include one or more rotor scrapers 204 that are radially aligned with respective rotor gap sections 110. Each rotor scraper 204 is spaced from the rotation axis by a fifth distance R5 that is greater than the fourth distance R4 to provide a relatively small gap to allow crop material to pass through. For example, the fifth distance R5 may be les than the first distance R1, as in the shown example.

As shown in FIG. 4, the rotor scrapers 204 also may be closely spaced with the adjacent rotors 108 to help prevent crop material from being compressed between them. In addition, the rotor scrapers 204 may be shaped such that the lead-in angle A between the top rotor scraper surface and the adjacent outer perimeter of the rotor 108 (as measured looking along the rotation axis 102a) remains below 90 degrees at all rotational positions of the topshaft assembly 100.

The scraper assembly 200 may include still more features to help prevent unwanted accumulation of crop material. For example, the various parts of the scraper assembly may have beveled entry surfaces, such as a beveled entry 204a on each rotor scrapers 204, a beveled entry 210g on each crop guide 210, and a beveled entry 206b at each rotor gap 206. Other alternatives and embodiments will be apparent to persons of ordinary skill in the art in view of the present disclosure.

The present disclosure describes a number of inventive features and/or combinations of features that may be used alone or in combination with each other or in combination with other technologies. The embodiments described herein are all exemplary, and are not intended to limit the scope of the claims. It will also be appreciated that the inventions described herein can be modified and adapted in various ways, and all such modifications and adaptations are intended to be included in the scope of this disclosure and the appended claims.

## Claims

1. A topshaft rotary antiwrap assembly comprising:
(a) a topshaft assembly (100) comprising:
a shaft (102) configured for rotating about a rotation axis (102a), and
one or more sprockets (104) mounted to the shaft (102) concentrically to the rotation axis (102a) to move in a rotation direction (102b) about the rotation axis; and
(b) a first scraper body (202) located adjacent to the topshaft assembly (100), ***characterized in that*** the first scraper body (202) comprises:
a first sprocket scraper (212) located adjacent to an outer perimeter of a first sprocket (104) of the one or more sprockets and radially aligned with the first sprocket (100) relative to the rotation axis (102a),
wherein the first sprocket scraper (212) comprises a respective sprocket scraper body (212a) that extends from a respective leading edge (212b) to a respective trailing edge (212c), and wherein the trailing edge (212c) is offset from the leading edge (212b) along the rotation axis (102a) and along the rotation direction such that the sprocket scraper body (202) directs a respective adjacent portion of crop material at least partially along the rotation axis (102a) as the respective adjacent portion of crop material moves along the rotation direction (102b) from the leading edge (212b) to the trailing edge (212c).

2. The topshaft rotary antiwrap assembly of claim 1, wherein the first sprocket scraper (212) further comprises a blocking wall (212d) extending along the rotation axis and along the rotation direction (102b), with the sprocket scraper body (212a) located radially between the blocking wall (212d) and the sprocket (104).

3. The topshaft rotary antiwrap assembly of any one of the foregoing claims, wherein the first scraper body (212a) further comprises a first crop guide (210) located adjacent to the first sprocket (104) and offset from the first sprocket (104) along the rotation axis (102a), the first crop guide (210) comprising:
a crop guide wall (210a) extending along the rotation direction; and
a crop guide wall step (210b) that:
extends radially from the crop guide wall (210a) towards the rotation axis (102a) to face opposite the rotation direction,
extends from a respective leading end (210c) to a respective trailing end (210d) along the rotation axis (102a) in a direction towards the first sprocket (104), and
extends from the respective leading end (210c) to the respective trailing end (210d) forward along the rotation direction (102b),
such that the crop guide wall step (102b) directs an adjacent portion of crop material at least partially along the rotation axis (102a) towards the sprocket (104) as the respective adjacent portion of crop material moves along the rotation direction from the respective leading end (210c) to the respective trailing end (210d).

4. The topshaft rotary antiwrap assembly of claim 3, wherein the crop guide wall step (102b) divides the crop guide wall (210a) between a leading guide wall surface (210e) and a trailing guide wall surface (210f), and the leading guide wall surface (210e) is tapered radially away from the rotation axis (102) in a direction extending from the respective leading end (210c) towards the respective trailing end (210d), such that the leading guide wall surface (210e) directs a respective adjacent portion of crop materially at least partially along the rotation axis towards the sprocket (104) as the respective adjacent portion of crop material moves radially away from the rotation axis (102a).

5. The topshaft rotary antiwrap assembly of claim 3, wherein the topshaft assembly (100) further comprises a first sprocket shoulder (106) positioned adjacent to the first sprocket (104), and spaced radially between the crop guide wall (210a) and the rotation axis (102a), wherein the first sprocket shoulder (106) comprises a shoulder step (106a) that extends from an adjacent portion of the first sprocket shoulder (106) away from the rotation axis (102a) to face in the rotation direction (102b) and thereby direct a respective adjacent portion of crop material along the rotation direction (102b).

6. The topshaft rotary antiwrap assembly of claim 5, wherein the shoulder step (106a):
extends from a respective leading end (106b) to a respective trailing end (106c) along the rotation axis (102a) in a direction towards the first sprocket (104), and
extends from the respective leading end (106b) to the respective trailing end (106c) backwards along the rotation direction (102b),
such that the shoulder step (106a) directs the respective adjacent portion of crop material at least partially along the rotation axis (102a) towards the sprocket (104) as the respective adjacent portion of crop material moves along the rotation direction (102b) from the respective leading end (106b) to the respective trailing end (106c).

7. The topshaft rotary antiwrap assembly of any one of the foregoing claims, wherein the topshaft assembly (100) further comprises one or more lobular rotors (108) mounted to rotate with the shaft (102) and extending radially away from the rotation axis (102a) and offset from the first sprocket (104) along the rotation axis (102a), wherein each lobular rotor (108) comprises a radially outer surface defined by one or more roots (108a) located at a first distance (R1) from the rotation axis (102a) and one or more peaks (108b) located at a second distance (R2) from the rotation axis (102a), wherein the second distance (R2) is greater than the first distance (R1).

8. The topshaft rotary antiwrap assembly of claim 7, wherein the first scraper body (202) comprises one or more rotor walls (206a), wherein each rotor wall (206a) is radially aligned with a respective lobular rotor (108) relative to the rotation axis (102a), and is spaced from the rotation axis by a third distance (R3) that is greater than the second distance (R2), to define a gap between the rotor wall (206a) and the respective lobular rotor (108) though which a respective adjacent portion of crop material moves along the rotation direction as the lobular rotor (108) rotates in the rotation direction.

9. The topshaft rotary antiwrap assembly of claim 7, wherein the topshaft assembly (100) further comprises one or more rotor gap sections (110), wherein each rotor gap section (110) is located adjacent to a respective lobular rotor (108) and offset from the respective lobular rotor along the rotation axis (102a), and wherein each rotor gap section (110) comprises a respective radially outer surface located at a fourth distance (R4) from the rotation axis, wherein the fourth distance (R4) is less than the first distance (R1).

10. The topshaft rotary antiwrap assembly of claim 9, wherein the first scraper body (212a) comprises one or more rotor scrapers (204), wherein each rotor scraper (204) is radially aligned with a respective rotor gap section (110) relative to the rotation axis, and is spaced from the rotation axis by a fifth distance (R5) that is greater than the fourth distance (R4) and less than the first distance (R1).

11. A feeder conveyor assembly comprising:
a feeder housing (14) extending from an inlet to an outlet;
a crop conveyor (16) ; and
a topshaft rotary antiwrap assembly according to any one of the foregoing claims, wherein
the topshaft assembly (100) is rotatably mounted at the feeder housing outlet and partially surrounded by the crop conveyor,
the one or more sprockets are in engagement with the crop conveyor,
and the first scraper body is located between an upper crop conveyor section extending from the topshaft assembly at a first location, and a lower crop conveyor section extending from the topshaft assembly at a second location.

12. The feeder conveyor assembly of claim 11, wherein the first scraper body (212a) further comprises a first crop guide (210) located adjacent to the first sprocket (104) and offset from the first sprocket (104) along the rotation axis (102a), the first crop guide comprising:
a crop guide wall (210a) extending along the rotation direction (102b); and
a crop guide wall step (210b) that:
extends radially from the crop guide wall (210a) towards the rotation axis to face opposite the rotation direction,
extends from a respective leading end (210c) to a respective trailing end (210d) along the rotation axis in a direction towards the first sprocket (104), and
extends from the respective leading end (210c) to the respective trailing end (210d) forward along the rotation direction (102b),
such that the crop guide wall step (102b) directs an adjacent portion of crop material at least partially along the rotation axis towards the sprocket (104) as the respective adjacent portion of crop material moves along the rotation direction from the respective leading end (210c) to the respective trailing end (210d).

13. The feeder conveyor assembly of claim 11 or claim 12, wherein the topshaft assembly further comprises a first sprocket shoulder (106) positioned adjacent to the first sprocket (104), and spaced radially between the crop guide wall (210a) and the rotation axis (102a), wherein the first sprocket shoulder (106) comprises a shoulder step (106a) that extends from an adjacent portion of the first sprocket shoulder (106) away from the rotation axis to face in the rotation direction and thereby direct a respective adjacent portion of crop material along the rotation direction; and
wherein the shoulder step (106a):
extends from a respective leading end (106b) to a respective trailing end (106c) along the rotation axis in a direction towards the first sprocket (104) to face in the rotation direction, and
extends from the respective leading end (106b) to the respective trailing end (106) backwards along the rotation direction,
such that the shoulder step (106a) directs the respective adjacent portion of crop material at least partially along the rotation axis (102a) towards the sprocket (104) as the respective adjacent portion of crop material moves along the rotation direction from the respective leading end (106b) to the respective trailing end (106c).

14. The feeder conveyor assembly of any one of claims 11-13, wherein the topshaft assembly further comprises one or more lobular rotors (108) mounted to rotate with the shaft (102) and extending radially away from the rotation axis and offset from the first sprocket (104) along the rotation axis, wherein each lobular rotor (108) comprises a radially outer surface defined by one or more roots (108a) located at a first distance R1 from the rotation axis and one or more peaks (108b) located at a second distance R2 from the rotation axis, wherein the second distance R2 is greater than the first distance R1.

15. The feeder conveyor assembly of claim 14, wherein the topshaft assembly further comprises one or more rotor gap sections (110), wherein each rotor gap section (110) is located adjacent to a respective lobular rotor (108) and offset from the respective lobular rotor along the rotation axis (102a), and wherein each rotor gap section (110) comprises a respective radially outer surface located at a fourth distance R4 from the rotation axis, wherein the fourth distance R4 is less than the first distance R1.
